# FASCICULE DE BREVET EUROPEEN

(11) **EP 2 128 390 B1**
(45) Date de publication et mention de la délivrance du brevet: **05.07.2017**
(21) Numéro de dépôt: 09160424.9
(22) Date de dépôt: 15.05.2009
(51) Int. Cl.: F02C 7/06, F16C 35/073, F01D 25/16

(54) **Dispositif de blocage axial d'un palier de guidage d'arbre dans une turbomachine**
Vorrichtung zur axialen Verriegelung des Lagers einer Welle in einer Strömungsmaschine
Locking device of a bearing on a shaft in a turbomachine

(30) Priorité: 29.05.2008 FR 0802924
(43) Date de publication de la demande: 02.12.2009
(73) Titulaire: Snecma, 75015 Paris (FR)
(72) Inventeur: Raberin, Laurent, 75014, Paris (FR); Rousselin, Stéphane, 77850, Hericy (FR); Servant, Régis, Eugène, Henri, 91270, Vigneux sur Seine (FR)
(74) Mandataire: Ramey, Daniel

(56) Documents cités:
- EP-A- 0 987 457
- EP-A- 1 498 624
- EP-A- 1 712 806
- EP-A- 1 813 792
- FR-A- 2 734 874
- US-A- 5 685 650

## Description

L'invention concerne un palier de guidage d'arbre dans une turbomachine ainsi qu'une turbomachine équipée d'un tel palier.

Un palier de guidage d'un arbre en rotation comprend usuellement deux bagues interne et externe enserrant des organes roulants, la bague externe étant montée sur une partie fixe et la bague interne étant montée sur une portée cylindrique de l'arbre. La bague interne du palier de guidage peut être bloquée axialement à une extrémité sur un rebord annulaire radial de la portée cylindrique de l'arbre et à l'autre extrémité par un élément vissé sur une partie filetée de cette portée cylindrique.

Dans des réalisations connues, l'élément qui assure par une extrémité le serrage de la bague interne sur le rebord de la portée cylindrique, comporte des moyens d'étanchéité de l'enceinte contenant le palier de guidage et de l'huile en suspension. Pour cela, cet élément comporte par exemple des joints à labyrinthe coopérant avec des pistes de matériau abradable portées par une paroi de cette enceinte.

Lorsque l'arbre guidé dans un tel palier est un arbre d'un compresseur haute-pression d'un turboréacteur, il est relié par un couple de pignons coniques (IGB ou Inlet GearBox) à un arbre radial d'entraînement de certains équipements comprenant notamment une pompe à carburant. Le palier de guidage de l'arbre du compresseur et le couple de pignons coniques (IGB) forment un ensemble modulaire qui est livré assemblé par son fournisseur avant son montage dans le turboréacteur.

Ce module comprend une cale amont interposée entre le rebord annulaire de la portée cylindrique de l'arbre et la bague interne du palier, qui doit être en appui sur ce rebord. Cette cale est reprise en usinage avant le montage du module, de façon à positionner correctement le pignon conique de l'arbre du compresseur par rapport au pignon conique de l'arbre radial, afin d'assurer un engrènement correct du couple de pignons coniques.

Ce module doit assurer, sans reprise d'usinage lors de l'assemblage moteur, un positionnement correct du rotor du compresseur haute-pression par rapport à son stator.

A cette fin, le module livré assemblé doit respecter avec une tolérance précise, une cote axiale comprise entre le plan de pose du support du couple de pignons coniques (IGB) et une face radiale de l'élément vissé qui forme une butée axiale de l'arbre du compresseur haute-pression. La tolérance sur cette cote axiale est très inférieure à la somme des tolérances des pièces correspondantes (le support du couple de pignons coniques, le palier de guidage de l'arbre et l'élément vissé), de sorte que le fournisseur du module doit reprendre l'une de ces pièces en usinage pour respecter la tolérance sur la cote axiale de l'ensemble.

C'est en général l'extrémité amont de l'élément vissé qui s'applique sur la bague interne du palier, qui est reprise en usinage. Une autre possibilité est d'interposer une cale entre la bague interne du palier et l'élément vissé. Cela amène le fournisseur du module à dévisser et revisser cet élément dans le module, ce qui est une opération délicate du fait de la faible longueur filetée de cet élément, de la faible dimension radiale des filets et du risque d'endommagement des léchettes des joints à labyrinthe de cet élément par les outillages utilisés.

En effet, l'utilisation d'un outillage de vissage de l'élément peut endommager les léchettes des joints à labyrinthe, conduisant à une diminution de l'efficacité de l'étanchéité des joints à labyrinthe, ce qui entraîne une fuite de l'huile de lubrification de l'enceinte contenant le palier de guidage.

En outre, les faibles dimensions des filetages de la portée cylindrique et de l'élément vissé se traduisent par un mauvais centrage de l'élément sur la portée cylindrique. Dès lors, le jeu requis entre les joints à labyrinthe et les pistes d'abradable nécessaire à la mise sous pression de l'enceinte contenant le palier de guidage, ne peut être obtenu, ce qui conduit à la fois à une usure prématurée des pistes d'abradables et à une mauvaise étanchéité de l'enceinte du palier de guidage.

Le document US-A-5685650 décrit un dispositif de fixation d'un palier de roulement sur une portée cylindrique d'un arbre au moyen d'un écrou vissé sur la portée cylindrique et bloqué axialement par un jonc élastique engagé dans une gorge annulaire de la bague interne du palier et dans une gorge annulaire d'une partie amont de l'écrou.

Le document FR 2734874 décrit un palier de roulement comprenant une bague interne 3 bloquée axialement à son extrémité aval sur un épaulement d'un arbre et à son extrémité amont par un anneau en matériau à mémoire de forme monté dans une gorge annulaire de l'arbre.

Le document EP 1813792 décrit un système de montage d'un arbre de turbine sur un manchon de support d'un palier de roulement au moyen d'un écrou monté à l'intérieur de l'arbre et vissé sur l'intérieur du manchon à son extrémité amont et bloqué à son extrémité aval grâce à un segment annulaire fendu entourant l'écrou et maintenu dans une gorge de l'arbre.

Le document EP 1712806 décrit un palier de roulement comprenant une bague interne comportant à son extrémité amont une gorge annulaire orientée radialement vers l'intérieur et formant avec une gorge annulaire orientée radialement vers l'extérieur d'un tourillon un espace annulaire de réception d'un jonc de blocage axial de la bague interne sur le tourillon.

L'invention a notamment pour but d'éviter ces inconvénients de façon simple, efficace et économique.

Elle propose à cet effet, un palier de guidage d'arbre dans une turbomachine comprenant une bague interne destinée à être montée sur une portée cylindrique d'un arbre et un anneau de blocage axial de cette bague, caractérisé en ce que l'anneau est monté coulissant sur la portée cylindrique et un jonc annulaire en matériau à mémoire de forme est monté dans un espace annulaire délimité par deux gorges annulaires formées en regard l'une de l'autre dans la portée cylindrique et dans la surface interne de l'anneau, le jonc annulaire étant apte à s'expanser radialement par effet de mémoire de forme lorsqu'il est soumis à une température supérieure à une température de transition de son matériau pour passer d'une position où il est contenu dans la gorge de la portée cylindrique dans une position de blocage de l'anneau sur la portée cylindrique.

Selon l'invention, les filetages de l'anneau et de la portée cylindrique sont remplacés par des gorges annulaires qui sont plus simples à usiner et qui risquent moins d'être dégradées lors des opérations de montage-démontage de l'anneau. Lorsque le jonc annulaire en matériau à mémoire de forme est soumis à une température inférieure à la température de transition de son matériau, il devient suffisamment souple pour être inséré dans la gorge annulaire de la portée cylindrique. L'anneau est ensuite monté coulissant sur la portée cylindrique, ce qui ne nécessite aucun outillage spécifique et évite tout endommagement de l'anneau. L'élévation de la température du jonc au-delà de la température de transition de son matériau permet son expansion radiale à l'intérieur de la gorge de l'anneau, ce qui assure le blocage axial de l'anneau sur la portée cylindrique et par conséquent le blocage axial de la bague interne sur cette portée cylindrique.

Avantageusement, l'effet mémoire de forme est un effet mémoire de forme simple, ce qui permet de réaliser un plus grand nombre de cycles de déformation entre la forme contractée et la forme expansée qu'avec un effet mémoire de forme double. Il est ainsi possible de conserver plus longtemps un même jonc.

La température de transition du matériau à mémoire de forme est inférieure à 20°C et est préférentiellement d'environ 15°C. La température de transition du matériau à mémoire de forme est choisie pour que le jonc s'expanse sous une température correspondant à la température ambiante dans des ateliers de montage de turbomachine.

Selon une autre caractéristique de l'invention, la largeur du jonc est sensiblement égale à la largeur de la gorge de la portée cylindrique.

La largeur de la gorge de l'anneau peut être légèrement supérieure à celle de la gorge de la portée cylindrique afin de garantir, lorsque l'anneau est monté coulissant sur la portée cylindrique, que la gorge de la portée cylindrique débouche radialement dans la gorge de l'anneau, ce qui permet l'expansion radiale du jonc dans la gorge de l'anneau.

Dans une réalisation de l'invention, le jonc est à section circulaire.

En variante, le jonc et les gorges peuvent être à section sensiblement rectangulaire ou carrée.

Selon une autre caractéristique de l'invention, les gorges de la portée cylindrique et de l'anneau ont sensiblement la même largeur.

La périphérie externe du jonc peut comprendre un chanfrein du côté de la bague interne du palier et la gorge de l'anneau comprendre une paroi oblique sur laquelle vient s'appliquer le chanfrein du jonc pour solliciter axialement l'anneau vers la bague interne.

Lorsque la température est supérieure à la température de transition du matériau à mémoire de forme, le jonc s'expanse et son chanfrein vient s'appliquer sur la paroi oblique de la gorge de l'anneau, ce qui conduit à une poussée de l'anneau vers la bague interne. De cette manière, le jonc exerce à la fois la fonction de blocage axial de l'anneau sur la portée cylindrique et également celle de serrage de l'anneau sur la bague interne. Le serrage est rendu possible par le fait que le jonc exerce sur l'anneau une force suffisamment importante pour pousser l'anneau en direction de la bague interne.

Le jonc est de préférence fendu, pour faciliter son insertion dans la gorge de la portée cylindrique.

L'invention concerne également une turbomachine, telle qu'un turboréacteur ou un turbopropulseur, caractérisée en ce qu'elle comprend un palier de guidage d'arbre tel que décrit ci-dessus, l'arbre pouvant être l'arbre d'entraînement du rotor d'un compresseur haute pression.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une demi-vue schématique en coupe axiale d'un palier de guidage d'arbre de compresseur haute pression selon la technique antérieure ;
- la figure 2 est une vue schématique à plus grande échelle de la zone délimitée en pointillés sur la figure 1 ;
- la figure 3 est une vue schématique en coupe axiale d'une extrémité d'une bague interne d'un palier de guidage et d'un jonc annulaire monté dans une gorge annulaire de la portée cylindrique selon un mode de réalisation de l'invention ;
- la figure 4 est une vue identique à la figure 3 dans laquelle le jonc est en position de blocage axial de la bague interne ;
- la figure 5 est une vue schématique en coupe axiale d'une extrémité de la bague interne d'un palier de guidage et d'un jonc annulaire monté dans une gorge de la portée cylindrique selon une variante de l'invention ;
- les figures 6 à 8 représentent les phases successives d'expansion radiale du jonc annulaire de la figure 5, conduisant au blocage et au serrage de l'anneau sur la bague interne du palier de guidage.

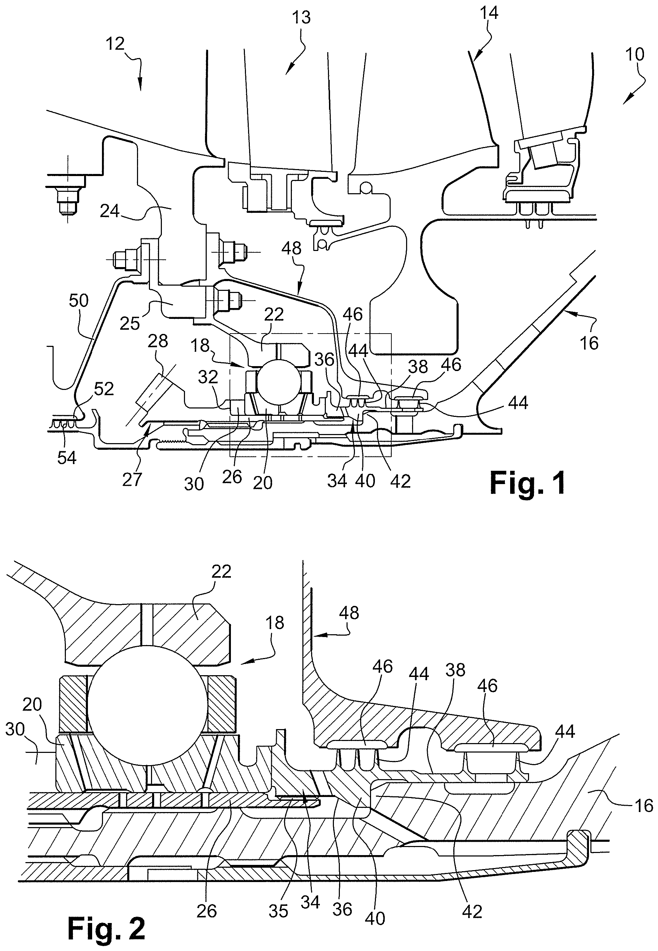

On se réfère tout d'abord aux figures 1 et 2 qui représentent un compresseur haute pression 10 agencé en aval d'un carter intermédiaire 12 d'une turbomachine telle qu'un turboréacteur ou un turbopropulseur d'avion. Le compresseur haute pression 10 comprend un stator 13 et un rotor 14 entraîné par un arbre 16 qui est porté et guidé à son extrémité amont par un palier 18 comportant une bague interne 20 solidaire en rotation de l'arbre 16 et une bague externe 22 fixée par boulonnage sur un support annulaire 25 fixé sur une bride 24 du carter intermédiaire 12.

Un pignon connique 27 est monté sur l'extrémité amont de l'arbre 16 du compresseur haute pression 10 et comprend en aval une portée cylindrique 26 intercalée entre l'arbre 16 et la bague interne 20 du palier de guidage 18. Le pignon 27 comprend à son extrémité amont une denture tronconique 28 engrenant avec un pignon conique de l'extrémité interne d'un arbre radial disposé dans un bras de passage (non représenté) du carter intermédiaire 12. Le pignon conique 27 permet de transmettre une partie du couple de rotation de l'arbre 16 du compresseur haute pression 10 à l'arbre radial pour faire fonctionner des équipements situés à la périphérie externe de la turbomachine.

La bague interne 20 du palier 18 est bloquée axialement à l'amont sur une cale annulaire 30 appliquée contre un rebord annulaire radial 32 de l'extrémité amont de la portée cylindrique 26 du pignon conique 27 et à l'aval par un anneau 34 vissé sur un filetage externe 35 de la portée cylindrique 26. L'ensemble constitué du palier 18, des pignons coniques, de la cale 30 et de l'anneau 34 est un ensemble modulaire qui est fourni pré-assemblé avant son montage dans la turbomachine. L'usinage de la cale annulaire 30, avant assemblage de l'ensemble modulaire, permet d'assurer lors du montage de l'ensemble modulaire dans la turbomachine, un positionnement axial optimal du pignon conique 27 de manière à ce qu'il engrène parfaitement avec le pignon conique de l'arbre radial.

L'anneau 34 comprend (figure 2) une paroi cylindrique amont 36 raccordée à sa périphérie aval à une paroi cylindrique aval 38 d'épaisseur plus petite que l'épaisseur de la paroi amont 36. La jonction entre les parois cylindrique amont 36 et aval 38 forme un épaulement annulaire radial interne 40 sur lequel un épaulement annulaire 42 de l'arbre 16 du compresseur haute pression 10 est appliqué, ce qui permet de bloquer axialement l'anneau 34.

Les extrémités aval des parois cylindriques amont 36 et aval 38 comprennent chacune un joint à labyrinthe 44 coopérant avec des pistes d'abradables 46 portées par une paroi annulaire 48 fixée par boulonnage sur la face aval de la bride 24 du carter intermédiaire 12. Une paroi tronconique 50 à section se réduisant vers l'amont est fixée par boulonnage à sa périphérie externe sur la face amont de la bride 24 du carter intermédiaire 12 et porte à sa périphérie interne des pistes d'abradables 52 coopérant avec un joint à labyrinthe 54 solidaire en rotation de l'arbre 16 du compresseur haute pression 10. Les parois 48 et 50 permettent ainsi d'assurer l'étanchéité de l'enceinte contenant le palier de guidage 18 en évitant que l'huile de lubrification du palier 18 qui est en suspension ne s'échappe de l'enceinte.

Ce type de maintien axial de la bague interne 20 du palier de guidage 18 par vissage de l'anneau 34 sur la portée cylindrique 26 n'est pas satisfaisant pour les raisons indiquées ci-dessus.

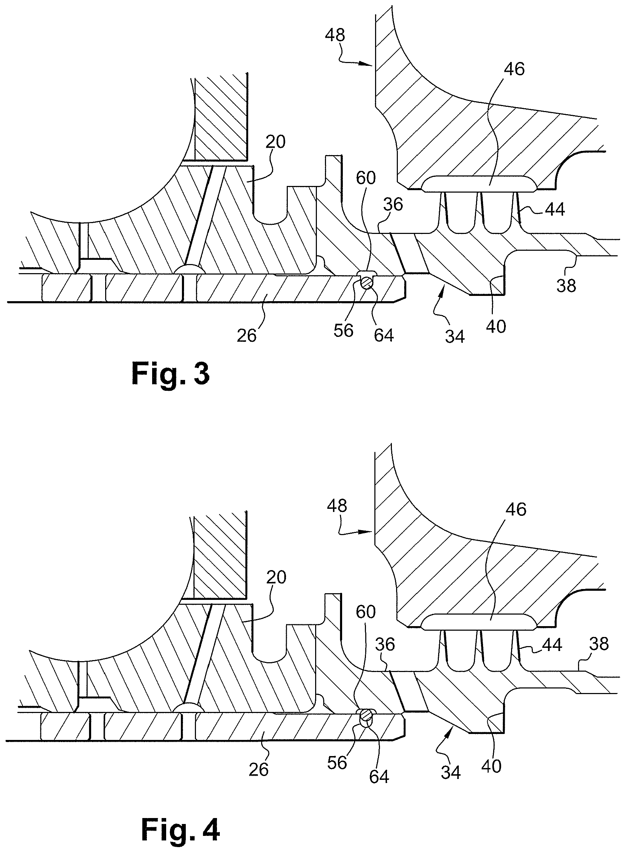

Selon l'invention, les filetages de la portée cylindrique 26 et de l'anneau 34 sont remplacés par deux gorges annulaires en regard l'une de l'autre, l'une 56 étant formée dans la portée cylindrique 26 et l'autre 60 étant formée dans la surface interne de l'anneau 34 (figure 3). Le blocage axial de l'anneau 34 coulissant sur la portée cylindrique 26 est assuré par un jonc annulaire 64 réalisé dans un matériau à mémoire de forme capable de s'expanser radialement lorsqu'il est soumis à une température supérieure à une température de transition de son matériau pour passer d'une position où il est entièrement contenu dans la gorge 56 de la portée cylindrique 26 (figure 3) dans une position de blocage de l'anneau 34 sur la portée cylindrique 26 (figure 4). Dans cette position de blocage de l'anneau 34 sur la portée cylindrique 26, la périphérie externe du jonc 64 est à l'intérieur de la gorge 58 de l'anneau 34 et la périphérie interne du jonc 64 est à l'intérieur de la gorge 56 de la portée cylindrique 26 (figure 4).

Le jonc annulaire 64 est réalisé dans un matériau à mémoire de forme susceptible de présenter un effet mémoire de forme simple. A cette fin, le jonc 64 est préalablement soumis à une phase d'éducation dans laquelle il est dans un premier temps conformé dans une position expansée de sorte que sa périphérie externe soit située à l'extérieur de la gorge 56 de la portée cylindrique 26, à une température supérieure à la température de transition du matériau à mémoire de forme de sorte que ce dernier se trouve en phase austénitique.

Puis, dans un second temps, le jonc 64 est resserré sur lui-même mécaniquement afin que sa périphérie externe soit située dans la gorge 56 de la portée cylindrique 26, à une température inférieure à la température de transition précitée de sorte que le matériau à mémoire de forme se trouve alors en phase martensitique. A cette fin, la profondeur de la gorge annulaire 56 de la portée cylindrique 26 est au moins égale à l'épaisseur radiale du jonc 64.

Le jonc 64 est alors prêt à subir une expansion radiale lorsque la température augmente jusqu'à la température de transition du matériau à mémoire de forme.

Du fait du caractère irréversible de l'effet mémoire de forme simple, le jonc 64 conserve sa forme expansée quelle que soit l'évolution ultérieure de la température.

Dans le premier mode de réalisation de l'invention représenté aux figures 3 et 4, le jonc 64 est à section circulaire et le fond de la gorge 56 de la portée cylindrique 26 est semi-circulaire. Le diamètre de la section du jonc 60 est sensiblement égal à la largeur axiale de la gorge 56 de la portée cylindrique 26. La largeur de la gorge 60 de l'anneau 34 est supérieure à celle de la gorge 56 de la portée cylindrique 26 afin de garantir lors du montage de l'anneau 34, que sa gorge annulaire 60 vienne se positionner en regard de la gorge 56 de la portée cylindrique 26, pour permettre l'expansion radiale du jonc 60 depuis la gorge 56 de la portée cylindrique 26 dans la gorge 60 de l'anneau 34.

La profondeur de la gorge annulaire 60 de l'anneau 34 est quant à elle inférieure au diamètre de la section du jonc 64 et est de l'ordre de la moitié de ce diamètre. A l'état expansé, le jonc 64 est ainsi partiellement à l'intérieur de la gorge 60 de l'anneau 34 et partiellement à l'intérieur de la gorge 56 de la portée cylindrique 26 (figure 4).

Il est préférable que le diamètre externe du jonc 64 à l'état expansé soit légèrement supérieur au diamètre du fond de la gorge 60 de l'anneau 34 afin que toute la périphérie externe du jonc 64 vienne en contact avec le fond de la gorge 60 de l'anneau 34, afin de bloquer le jonc annulaire 64 dans le fond de la gorge 60 de l'anneau 34.

Le blocage axial de la bague interne 20 sur la portée cylindrique 26 s'effectue de la manière suivante : le jonc annulaire 64 est monté dans la gorge 60 de la portée cylindrique 26 à une température inférieure à la température de transition du matériau à mémoire de forme de sorte que le jonc 64 qui est en phase martensitique est souple. L'anneau 34 est ensuite monté coulissant sur la portée cylindrique 26 pour que son extrémité amont vienne en contact avec l'extrémité aval de la bague interne 20 et de manière à ce que sa gorge annulaire 60 viennent en regard avec la gorge annulaire 56 de la portée cylindrique 26. L'augmentation de la température au-dessus de la température de transition induit un passage du jonc 64 en phase austénitique conduisant à une augmentation de sa rigidité et à son expansion radiale à l'intérieur de la gorge 60 de l'anneau 34, pour le blocage de l'anneau 34 sur la portée cylindrique 26.

Le démontage est réalisé en refroidissant la bague interne 20 qui par conduction refroidit le jonc 64 et le fait passer de son état rigide en phase austénitique à son état souple en phase martensitique, le jonc 64 restant à l'état expansé. Une traction vers l'aval exercée sur l'anneau 34 permet de contracter radialement le jonc 64 dans la gorge 56 de la portée cylindrique 26 et autorise un démontage de l'anneau 34 et de la bague interne 20.

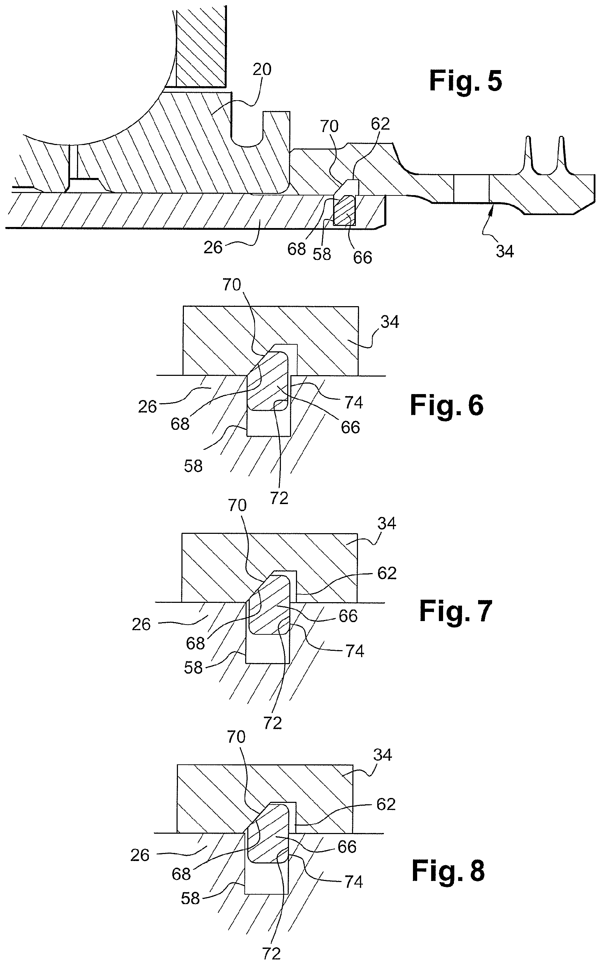

Dans le second mode de réalisation de l'invention, représenté aux figures 5 à 8, la gorge 58 de la portée cylindrique 26 a une section rectangulaire et le jonc annulaire 66 est à section rectangulaire et comporte sur sa périphérie externe un chanfrein 68 situé du côté de la bague interne 20. La gorge 62 de l'anneau 34 est à section semi-trapézoïdale et comprend une paroi oblique 70 ou tronconique à section se réduisant vers l'amont, sensiblement parallèle à la surface chanfreinée 68 du jonc annulaire 66.

Dans cette variante, le jonc 66 exerce à la fois la fonction de blocage de l'anneau 34 sur la portée cylindrique 26 et une fonction de serrage de l'anneau 34 sur l'extrémité aval de la bague interne 20. En effet, lorsque la température augmente et passe au dessus de la température de transition du matériau à mémoire de forme, le jonc 66 s'expanse radialement et son chanfrein 68 vient en contact avec la paroi oblique 70 de la gorge 62 de l'anneau 34 (figure 6), ce qui provoque un décalage vers l'aval du jonc 66 dans la gorge 58 de la portée cylindrique 26, jusqu'à ce que la face aval 72 du jonc 66 vienne en appui sur la face aval 74 de la gorge 58 de la portée cylindrique 26 (figure 7). Dans cette position, le jonc 66 est bloqué en aval et son expansion radiale conduit à ce que sa surface chanfreinée 68 appui sur la paroi oblique 70, ce qui induit sur l'anneau une force axiale dirigée vers la bague interne 20 du palier de guidage 18, et permet une poussée vers l'amont de l'anneau 34 et donc un serrage de l'anneau 34 sur l'extrémité aval de la bague interne 20 (figure 8).

Le serrage est rendu possible par le fait que le jonc 66 exerce une force suffisante sur l'anneau 34 en direction de la bague interne 20. Cette force est par exemple de l'ordre de cinq fois supérieure à la force nécessaire à la déformation du jonc 66 lors de la phase d'apprentissage.

La gorge 62 de l'anneau 34 a une longueur axiale légèrement supérieure à celle de la gorge 58 de la portée cylindrique 26.

Lors de l'étape de démontage, l'intégration d'un chanfrein 68 sur le jonc annulaire 66 coopérant avec une paroi oblique 70 de la gorge 62 de l'anneau 34 facilite la contraction du jonc annulaire 66 dans la gorge 58 de la portée cylindrique 26 comparativement à un jonc annulaire 64 sans chanfrein.

L'invention ainsi décrite évite tout risque d'endommagement des joints à labyrinthe 44 portés par l'anneau 34 et assure une étanchéité optimale de l'enceinte contenant le palier de guidage 18. Le montage coulissant de l'anneau 34 permet un centrage simple et efficace de celui-ci sur la portée cylindrique 26. La température de transition du matériau à mémoire de forme est choisie pour correspondre approximativement à une température ambiante dans les ateliers de montage de turbomachine, ce qui permet que le jonc reste en phase austénitique et ainsi conserve une bonne rigidité assurant un blocage efficace de l'anneau 34 sur la portée cylindrique 26.

La température de transition du matériau à mémoire de forme peut être inférieure à 20°C et est avantageusement de l'ordre de 15°C.

Le jonc annulaire 64, 66 est fendu, afin de faciliter son insertion dans la gorge de la portée cylindrique 26 sous sa forme contractée.

Il est également possible d'utiliser un jonc annulaire 64, 66 présentant un effet mémoire de forme double, c'est-à-dire capable de s'expanser lorsque la température augmente au-delà de la température de transition de son matériau et également capable de se contracter lorsque la température diminue en dessous de cette même température de transition. Cependant, l'effet mémoire de forme simple permet un plus grand nombre de cycles de déformation entre l'état initial et l'état expansé qu'avec un jonc annulaire à effet mémoire de forme double, ce qui permet d'augmenter la durée de vie d'un jonc annulaire.

Dans la description ci-dessus, le terme « portée cylindrique » a été utilisé pour désigner une portée cylindrique fixée à l'arbre de rotation du compresseur haute pression. L'invention s'applique bien entendu au cas où la portée cylindrique fait partie intégrante de l'arbre de rotation.

## Revendications

1. Palier de guidage d'arbre dans une turbomachine, comprenant une bague interne (20) destinée à être montée sur une portée cylindrique (26) d'un arbre (16) et un anneau de blocage axial de cette bague (20), **caractérisé en ce que** l'anneau (34) est monté coulissant sur la portée cylindrique (26) et un jonc annulaire (64, 66) en matériau à mémoire de forme est monté dans un espace annulaire délimité par deux gorges annulaires (56, 58, 60, 62) formées en regard l'une de l'autre dans la portée cylindrique (26) et dans la surface interne de l'anneau (34), le jonc annulaire (64, 66) étant apte à s'expanser radialement par effet de mémoire de forme lorsqu'il est soumis à une température supérieure à une température de transition de son matériau pour passer d'une position où il est contenu dans la gorge (56, 58) de la portée cylindrique (26) dans une position de blocage de l'anneau (34) sur la portée cylindrique (26).

2. Palier selon la revendication 1, **caractérisé en ce que** l'effet mémoire de forme est un effet mémoire de forme simple.

3. Palier selon la revendication 1 ou 2, **caractérisé en ce que** la température de transition du matériau à mémoire de forme est inférieure à 20°C.

4. Palier selon l'une des revendications 1 à 3, **caractérisé en ce que** la température de transition du matériau à mémoire de forme est d'environ 15°C.

5. Palier selon l'une des revendications 1 à 4, **caractérisé en ce que** la largeur du jonc (64, 66) est sensiblement égale à la largeur de la gorge (56, 58) de la portée cylindrique (26).

6. Palier selon l'une des revendications 1 à 5, **caractérisé en ce que** la largeur de la gorge (60, 62) de l'anneau (34) est supérieure à celle de la gorge (56, 58) de la portée cylindrique (26).

7. Palier selon l'une des revendications 1 à 6, **caractérisé en ce que** le jonc (64, 66) est à section circulaire.

8. Palier (selon l'une des revendications 1 à 5, **caractérisé en ce que** le jonc (66) et les gorges (58, 62) sont à section sensiblement rectangulaire ou carrée.

9. Palier selon la revendication 6, **caractérisé en ce que** les gorges (58, 62) de la portée cylindrique (26) et de l'anneau (34) ont sensiblement la même largeur.

10. Palier selon la revendication 9, **caractérisé en ce que** la périphérie externe du jonc (66) comprend un chanfrein (68) du côté de la bague interne (20) du palier (18) et la gorge (62) de l'anneau (34) comprend une paroi oblique (70) sur laquelle vient s'appliquer le chanfrein (68) du jonc (66) pour solliciter axialement l'anneau (34) vers la bague interne (20).

11. Palier selon l'une des revendications précédentes, **caractérisé en ce que** le jonc (66) annulaire est fendu.

12. Turbomachine, telle qu'un turboréacteur ou un turbopropulseur, **caractérisée en ce qu'**elle comprend un palier de guidage (18) d'arbre (16) selon l'une des revendications précédentes.

13. Turbomachine selon la revendication 12, **caractérisée en ce que** l'arbre (16) est relié au rotor (14) d'un compresseur haute pression (10).

## Patentansprüche

1. Führungslager zum Führen einer Welle in einer Turbomaschine, enthaltend einen Innenring (20), der dazu bestimmt ist, an einer zylindrischen Auflage (26) einer Welle (16) gelagert zu werden, und einen axialen Sicherungsring zum Sichern dieses Rings (20), **dadurch gekennzeichnet, dass** der Sicherungsring (34) an der zylindrischen Auflage (26) gleitbeweglich gelagert ist und ein Haltering (64, 66) aus einem Material mit Formgedächtnis in einem ringförmigen Raum gelagert ist, der von zwei ringförmigen Nuten (56, 58, 60, 62) eingegrenzt wird, die in der zylindrischen Auflage (26) und in der Innenfläche des Sicherungsrings (34) einander gegenüberliegend ausgebildet sind, wobei der Haltering (64, 66) dazu geeignet ist, sich durch den Formgedächtniseffekt radial auszudehnen, wenn er einer Temperatur unterliegt, die höher als die Übergangstemperatur seines Materials ist, um von einer Position, wo er in der Nut (56, 58) der zylindrischen Auflage (26) enthalten ist, in eine Sicherungsposition zum Sichern des Sicherungsrings (34) an der zylindrischen Auflage (26) überzugehen.

2. Lager nach Anspruch 1, **dadurch gekennzeichnet, dass** der Formgedächtniseffekt ein einfacher Formgedächtniseffekt ist.

3. Lager nach Anspruch 1 oder 2, **dadurch gekennzeichnet, dass** die Übergangstemperatur des Formgedächtnismaterials unter 20 °C liegt.

4. Lager nach einem der Ansprüche 1 bis 3, **dadurch gekennzeichnet, dass** die Übergangstemperatur des Formgedächtnismaterials etwa 15 °C beträgt.

5. Lager nach einem der Ansprüche 1 bis 4, **dadurch gekennzeichnet, dass** die Breite des Halterings (64, 66) im Wesentlichen gleich der Breite der Nut (56, 58) der zylindrischen Auflage (26) ist.

6. Lager nach einem der Ansprüche 1 bis 5, **dadurch gekennzeichnet, dass** die Breite der Nut (60, 62) des Sicherungsrings (34) größer als die der Nut (56, 58) der zylindrischen Auflage (26) ist.

7. Lager nach einem der Ansprüche 1 bis 6, **dadurch gekennzeichnet, dass** der Haltering (64, 66) einen kreisrunden Querschnitt hat.

8. Lager nach einem der Ansprüche 1 bis 5, **dadurch gekennzeichnet, dass** der Haltering (66) und die Nuten (58, 62) im Querschnitt im Wesentlichen rechteckförmig bzw. quadratisch sind.

9. Lager nach Anspruch 6, **dadurch gekennzeichnet, dass** die Nuten (58, 62) der zylindrischen Auflage (26) und des Sicherungsrings (34) im Wesentlichen die gleiche Breite haben.

10. Lager nach Anspruch 9, **dadurch gekennzeichnet, dass** der Außenumfang des Halterings (66) eine Fase (68) auf der Seite des Innenrings (20) des Lagers (18) hat und die Nut (62) des Sicherungsrings (34) eine schräg verlaufende Wand (70) aufweist, an welche sich die Fase (68) des Halterings (66) anlegt, um den Sicherungsring (34) axial zum Innenring (20) hin zu beaufschlagen.

11. Lager nach einem der vorangehenden Ansprüche, **dadurch gekennzeichnet, dass** der Haltering (66) gespalten ist.

12. Turbomaschine, wie etwa Turbostrahltriebwerk oder Turboprop-Triebwerk, **dadurch gekennzeichnet, dass** sie ein Führungslager (18) zum Führen einer Welle (16) nach einem der vorangehenden Ansprüche aufweist.

13. Turbomaschine nach Anspruch 12, **dadurch gekennzeichnet, dass** die Welle (16) mit dem Rotor (14) eines Hochdruckverdichters (10) verbunden ist.

## Claims

1. A guide shaft bearing in a turbomachine, comprising an internal ring adapted to be mounted on a cylindrical contact surface of a shaft and an axial locking ring of this ring, **characterised in that** the ring is mounted sliding on the cylindrical contact surface and an annular rib made of shape memory material is mounted in an annular area delimited by two annular grooves facing each other and formed in the cylindrical contact surface and in the internal surface of the ring, the annular rib being able to expand radially by shape memory effect when it is subjected to a temperature greater than a transition temperature of its material to pass from a position wherein it is contained in the groove of the cylindrical contact surface to a locking position of the ring on the cylindrical contact surface.

2. A Bearing according to claim 1, **characterised in that** the shape memory effect is a one-way shape memory effect.

3. A Bearing according to claim 1 or 2, **characterised in that** the transition temperature of the shape memory material is less than 20°C.

4. A Bearing according to claims 1 to 3, **characterised in that** the transition temperature of the shape memory material is approximately 15°C.

5. A Bearing according to claims 1 to 4, **characterised in that** the width of the rib is substantially equal to the width of the groove of the cylindrical contact surface.

6. A Bearing according to claims 1 to 5, **characterised in that** the width of the groove of the ring is greater than that of the groove of the cylindrical contact surface.

7. A Bearing according to claims 1 to 6, **characterised in that** the rib is of circular section.

8. A Bearing according to claims 1 to 5, **characterised in that** the rib and the grooves are of substantially rectangular or square section.

9. A Bearing according to claim 6, **characterised in that** the grooves of the cylindrical contact surface and of the ring substantially have the same width.

10. A Bearing according to claim 9, **characterised in that** the external periphery of the rib comprises a chamfer on the side of the internal ring of the bearing and the groove of the ring comprises an oblique wall whereon the chamfer of the rib comes into contact in order to axially solicit the ring towards the internal ring.

11. A Bearing according to any preceding claim, **characterised in that** the annular rib is split.

12. A Turbomachine, such as a turbojet or a turboprop, **characterised in that** it comprises a steady shaft bearing according to any preceding claim.

13. A Turbomachine according to claim 12, **characterised in that** the shaft is connected to the rotor of a high-pressure compressor.
